# EUROPEAN PATENT APPLICATION

(11) **EP 0 669 744 A2**
(43) Date of publication of application: **30.08.1995**
(21) Application number: 95500009.6
(22) Date of filing: 06.02.1995
(51) Int. Cl.: H04M 1/00, H04M 1/65

(54) **Telephone line universal circuit**

(30) Priority: 25.02.1994 ES 9400382
(71) Applicant: TELEFONICA DE ESPANA, S.A., E-28013 Madrid (ES)
(72) Inventor: Pozas Alvarez, Jose Antonio, E-28043 Madrid (ES); Bernales Pacheco, Victor, E-28043 Madrid (ES)
(74) Representative: Sanchez del Campo Gonzalez de Ubierna, Ramon

(57) **Abstract**

A line universal hybrid circuit consisting of a circui formed by a feeding bridge, the function of which is to provide the line with an adequate voltage, and a coder/decoder performing a signal conversion and the programming of the units composing the circuit, carrying out a signaling process for a link or subscriber line; and it may be configured as a terminal circuit of line by picking up the line for initiating certain signaling processes.

## Description

### BACKGROUND OF THE INVENTION

The present specification refers to a Patent of Invention related to a Line Universal Hybrid Circuit, including the functions that an electromechanical telephone station recorder performs - over the circuit of a subscriber line or a link circuit, carrying out a control of these lines for a period of time during which a signaling process for said lines is performed.

### FIELD OF THE INVENTION

This invention applies to the telecommunications field, forming particularly a part of the telephone station recorders which allow a call signaling to be carried out, both those made by subscribers, and by other telephone stations.

### RELATED ART

At present, the signaling for link and subscribers lines of the recorder systems of electromechanical telephone stations is performed by opening and closing different electric contacts providing the connecting wires with feed and signals which are adequate to a call.

All this means that, on the acting mechanisms, it is necessary to overdimension both their voltage and current values, and the - quantity of elements to be placed, in order to obtain a good performance of same, with which, in addition to the large physical - space occupied by these recorders, a substantial excess consumption is also generated, being necessary to incorporate dissipation systems for the excess power generated.

Furthermore, upon considering the type of the electromechanical recorders, it is not possible to service those subscribers acceding to them in a multifrequency mode, and the maintenance and modifications to be performed on them require both expensive and laborious processes.

In order to overcome the above-mentioned difficulties, an evident solution would be to replace the electromechanical elements of the recorders by electronic circuits performing the functions of those.

In this way, in addition to the space and consumption savings, it is possible to connect subscribers to electromechanical stations with a multifrequency signaling, and both the modifications and the maintenance of systems would greatly simplified.

It is known the existence of electronic circuits which are capable of performing signaling tasks for the subscriber circuits, by feeding the subscriber equipment and carrying out the necessary polarity changes.

There are also electronic circuits performing signaling tasks for link circuits not requiring any feed, and having a multifrequency type.

Nevertheless, the Applicant does not know the existence of a circuit capable of performing, without distinction, a signaling for line circuits and link circuits in a programmed way, by using information previously detected on the type of output to be accede, and, so, feeding or not feeding the relative circuit.

It is natural that the obvious solution to the above mentioned problem would be to rely on a line universal hybrid circuit which could carry out the pursue tasks.

### SUMMARY OF THE INVENTION

The line universal hybrid circuit as proposed by the invention constitutes per se an evident solution to the above mentioned problems, since starting from it, it is possible to have a line universal hybrid circuit including the functions carried out by an electromechanical telephone station recorder on a subscriber line circuit or a link circuit, by performing a control on these lines for the cycle during which the signaling process for same is carried out.

The circuit is composed of a feed bridge the function of which is to provide the line with an adequate voltage, and a coder/decoder performing a signal conversion and the programming of the units composing the circuit.

The line universal hybrid circuit performs a signaling process for a line of subscriber, in which case it intervenes in the process from the moment in which the call is initiated until the moment in which this call has been routed, this being the time in which the recorder is released, or else for a link line, in which case it intervenes in the signaling process between two stations by a link (output/arrival), ending in the moment the recorder is released.

Apart from this, it is to be pointed out that the circuit can be configured as a line terminal circuit, by picking up the line in order to initiate certain signaling processes.

In a more definite way, the line universal hybrid circuit of the invention is constituted starting from two functional blocks, namely:
- Feed bridge
- Interface and hybrid zone.

The function of the feed bridge is to make a direct current interface with the subscriber, and it is, basically, a direct current feeder.

A portion of the feed circuit architecture is based in the utilization of switched sources, particularly in the topology flyback, with which it is possible to optimize the dissipation of power from the circuit under any load condition.

The feed bridge is composed of the following elements, namely:
- DC/DC converter, the function of which is to supply an adequate current and voltage to the load, being protected in front of overvoltages, and it is synchronized with an outer clock signal. Furthermore, the converter accepts a wide range of feeding voltage for operating, and it is configured by a control and - switching block, a transformer, a block of filters and output rectifiers, as well as a synchronizing circuit.
- Postrecorders stabilizing the voltage, both in the converter refeeding circuit, and the feeding block.
- Picking up detecting circuit interpreting loop openings and closings,by using a circuit signal shaping the refeeding loop - of the DC/DC converter. The circuit signal is a continuous voltage the value of which is proportional to the value of the current delivered by the feed bridge.
- Feeding loop simulating a feed bridge with an apparent battery voltage, and a series impedance at each of the outputs, and reducing the power dissipation at the output when the value of the load connected to it has a small value.

The feeding loop can be divided into a control circuit and an output stage.

The interface and hydrid zone carries out an analog to digital and digital to analog conversion, with a selective compressing law, of the signals which are present in the telephone line.

Other type of functions are those referring to the conversion from two to four wires, and from four to two wires, a programming control on the circuit, and the achievement of the programming of the feed bridge and the circuits related to it.

For the performance of these functions, the hybrid zone and the digital interface zone rely on a coder-decoder performing the conversions and controls developed by the block, a transformer for performing signals in alternate current and allowing a galvanic isolation to be established between the line and the coder/decoder, and the interfaces with the feeding loop and with the links. It relies also on an acting driver on a relay.

Apart from these two already mentioned blocks, constituted by the feed bridge and the hybrid zone, the invention relies on an active load allowing the line circuit to be configured as a terminal circuit, so that, under determined conditions, it has a capacity enough to pick up the line.

Its enabling/disabling is performed by means of an optocoupler in order to isolate the coder/decoder from the signals to which the terminal wires "a" and "b" can be referenced.

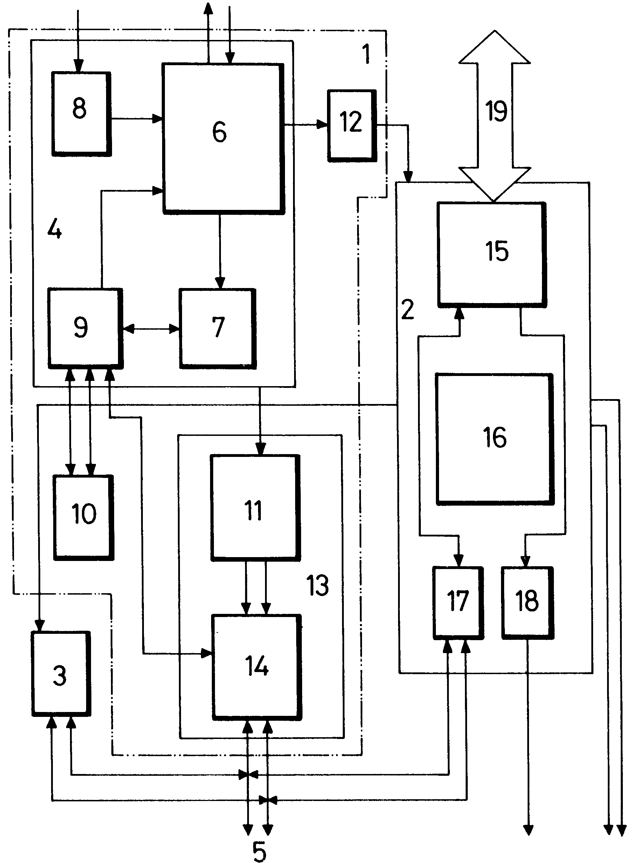

### BRIEF DESCRIPTION OF THE DRAWING

In order to complement this description, and to aid to a better understanding of the features of the invention, the accompanying drawing, which is a part of this specification, shows in an illustrative but non limitative sense, the following:

The sole Figure shows a block diagram of the line hybrid circuit of the invention, representing the most outstanding functional elements thereof.

### DETAILED DESCRIPTION OF THE PREFERRED EMBODIMENT

From the view of this sole figure, it can be seen a block diagram showing the inner structure of the line hybrid circuit, which is constituted, as already said, by a feed bridge (1), a block of the hybrid zone and interface (2), as well as an active load (3).

The feed bridge (1) performs a direct current interface with the subscriber, and it is basically a direct current feeder.

A portion of the architecture of this feed bridge (1) is based on the utilization of switched sources, so optimizing the requirements of the circuit under any load condition.

In relation to the feed bridge (1), the following functional elements are to be considered:

- A DC/DC converter, the function of which is to deliver, at the output, adequate voltage values according to the value of the current circulating via the load connected to an output (5) of the feed bridge (1).

This DC/DC converter (4) has a limited current, and is protected against short-circuits at its output, being, in turn, synchronized with an outer clock signal, accepting a wide space in the feed which is necessary for a correct operation. The DC/DC converter (4) consists of:

A) A control and switching block (6), performing functions of a controller in current mode for switched sources, sensing and determining the value of the current circulating via the winding of the transformer primary (7). A protection against short-circuits at the outputs is provided by means of a circuit comparing, pulse by pulse, a reference voltage with the current circulating via the transformer primary winding.

The control and switching block (6) relies also on a refeeding circuit controlling the values of the output voltage.

B) A transformer (7) with adequate characteristics of permeability, heat losses, frequency range, etc., etc.

The transformer (7) is used as the only power storage device, not being necessary to use an inductor.

While the transistors of the control block (6) are conducted, power is stored in the transformer primary winding (7), and then this power is transferred to the secondary when the transistors are disconnected. To this end, rectifiers controlling the voltage levels toward the output (5) have been provided, and are associated with the transformer (7).

Also, there is a Snubber network for smoothing the transients caused during the switching, and a limiter for the reverse voltage produced when the control block (6) is disconnected.

C) An outer synchro (8), this block conforming the frequencies at which the converter (4) must work, depending on the use to be made of same, receiving the inputs from the outer signal of the clock and reference signal which are galvanically uncoupled from the rest of the converter circuits.

D) Rectifiers and filters (9) handling the value of the repetitive crest direct current circulating through them when a short-circuit is produced at any output with regard to the battery voltage.

The output of the block of rectifiers and filters (9) is connected to postregulators (10) using the voltages they receive to feed the refeeding circuit of the control block (6) and the feeding loop (13).

Connected to the control block (6), there is a circuit (12) for detecting pick-ups, which translates the openings and closings of the loop, by determining whether they are in a open or close condition, according to the voltage value it receives from the refeeding loop of converter (4).

The feeding loop (13) is used to simulate a feed bridge with a battery voltage and a series impedance to each of the outputs, and, on the other hand, to reduce the power dissipation in the output stage when the value of the load connected is small.

The feeding loop (13) is composed of a control circuit (11), the function of which is to simulate a battery feed and a determined load, as well as an output stage (14) which is basically a bridge with transistors operating as programmable current sources according to the load placed at the output (5).

The hybrid and digital interface zone (2) is composed of a coder-decoder (15), an interface (16) with the feeding loop, a second interface (17) with links and a relay driver (18).

The main tasks corresponding to this hybrid and digital interface zone (2) are carried out by the coder-decoder (15), which takes on the task of:
- A converter from 2 to 4 wires, and from 4 to 2 wires, performing also a galvanic insulation by means of an inner transformer.
- Analog-digital and digital-analog conversion, with a compression law selective to the signals which are present in the telephone line.
- It has a series control port (19) for receiving and transmitting the programming functions corresponding to the circuit.
- It carries out the programmming of the feedbridge (1), and that of the hanging up/picking up block (12), using for this purpose the feeding interface (16).

It has been provided a relay control (18) allowing the output wires (5) of the link couple or circuit subscriber to be connected-disconnected, through the adequate interface (17) for this task.

The active load (3) allows the line circuit to be configured for certain requirements, such as a terminal circuit, having, therefore an effective capacity of picking up the line.

It is not considered necessary to extend more this description for an expert in the art to understand the scope of the invention and the advantages derived from it.

The materials, shape, size and arrangement of the components - are open to variation, provided that it does not imply any alteration to the essence of the invention.

The terms under which this specification has been described - should be always taken in an ample and not limitative sense.

## Claims

**1.-** A line universal hybrid circuit, of those constituted by a feed bridge (1), a hybrid and digital interface zone (2), an active load, a programming data input port (19), and a signaling output (5), characterized in that the feed bridge (1) generates a programmed signaling for the loop to which it is connected at the output (5), independently whether this is a link circuit or a subscriber line circuit.

**2.-** A line universal hybrid circuit, according to claim 1, characterized in that the hybrid and digital interface zone (2) detects, through the information received, whether the circuit to be signalized is that of a subscriber line or that of a link with other station, and so programming or not, digitally, its feed.

**3.-** A line universal hybrid circuit, according to any of the - precedent claims, characterized in that the active load (3) configures the circuit as a terminal capable of carrying out a pick out of the line.

**4.-** A line universal hybrid circuit, according to the preceding claims, characterized in that the DC/DC converter (4) is of switched sources and optimizes the circuit requirements under different load conditions at the output (5).

**5.-** A line universal hybrid circuit, according to the preceding claims, characterized in that the control and switching block (6) protects the circuit against overvoltages and short-circuits at the outputs.

**6.-** A line universal hybrid circuit, according to the preceding claims, characterized in that the control and switching block (6) determines the voltage at the terminals, adapting it to the variations of the feeding voltage in the case of a open loop.
